# EUROPÄISCHE PATENTSCHRIFT

(11) **EP 0 756 137 B1**
(45) Veröffentlichungstag und Bekanntmachung des Hinweises auf die Patenterteilung: **28.02.2001**
(21) Anmeldenummer: 96109922.3
(22) Anmeldetag: 20.06.1996
(51) Int. Cl.: F24D 10/00

(54) **Wärmeübertragung mit kondensat- und dampfseitiger Steuerung**
Heat transfer with steam and condensate side regulation
Transfert de chaleur avec régulation côté condensat et côté vapeur

(30) Priorität: 28.07.1995 DE 19527743
(43) Veröffentlichungstag der Anmeldung: 29.01.1997
(73) Patentinhaber: Helmut Bälz GmbH, D-74076 Heilbronn (DE)
(72) Erfinder:
(74) Vertreter: Patentanwälte Rüger, Barthelt & Abel

(56) Entgegenhaltungen:
- EP-A- 0 579 933
- DE-A- 3 029 181
- FR-A- 1 375 643
- FR-A- 2 294 479
- US-A- 3 186 641
- D.W. SPITZER: "REMOTELY SET PRESSURE REGULATORS; A USER'S PERSPECTIVE" 1991 , ADVANVES IN INSTRUMENTATION AND CONTROL VOL 46, PART 2 , RESEARCH TRIANGLE PARK, NC, US XP000347556 * Seite 1161 - Seite 1174 *

## Beschreibung

Dampfwärmesysteme, insbesondere Ferndampfsysteme und Werkdampfsysteme, nutzen gespannten und meist überhitzten Dampf als Wärmeträger zum Transport von Wärmeenergie über häufig größere Entfernungen und zu unterschiedlichen Wärmeverbrauchern oder Wärmeverbrauchergruppen. Wenn zur unmittelbaren Beheizung einzelner Wärmeverbraucher Warmwasser verwendet wird, wird die in dem Dampf enthaltene Wärme zuvor mittels Wärmeübertrager auf in einem Kreislauf geführtes Heizwasser übertragen. Andere Wärmeverbraucher sind bspw. Anlagen, mit denen flüssige Lebensmittel, wie Fruchtsäfte, Milch o.ä. erhitzt wird. Es sind außerdem Reindampferzeuger als Wärmeverbraucher in Gebrauch. Diese erzeugen aus gespanntem heißen Dampf einen weniger überhitzten Dampf hoher Reinheit, bspw. zur Luftbefeuchtung in Krankenhäusern, zur Sterilisation von Wäsche oder Operationsbestecken oder zum Kochen. Die Wärmeverbraucher weisen einen sowohl kurz- als auch längerfristig schwankenden Wärmeverbrauch auf, an den die Wärmetauscher hinsichtlich ihrer Wärmeabgabe anzupassen sind.

Aus der EP-A-0 579 933 A1 ist es dazu bekannt, einen Warmwasserbereiter, der primärseitig mit Dampf beaufschlagt ist und sekundärseitig Warmwasser abgibt, über ein in der Kondensatleitung liegendes Ventil zu steuern oder zu regeln. Der Warmwasserbereiter hat ein Rohrheizbündel, in dem Dampf kondensiert. Während von der Eingangsseite her permanent Dampf mit einem konstanten oder schwankenden Druck und mit hoher Temperatur ansteht, wird die Höhe der Wärmeabgabe des Rohrheizbündels durch die ausgelassene Kondensatmenge bestimmt. Zusätzlich ist in der zuführenden Dampfleitung ein Sicherheitsventil angeordnet, das bei Betrieb immer voll offen ist. Das Sicherheitsventil ist von einer Sicherheitsabschalteinrichtung gesteuert, die die Temperatur in dem Warmwasserbereiter überwacht und das Sicherheitsventil bei Überschreitung einer Grenztemperatur sofort vollständig schließt. Bei hoher Wärmeabgabe (Vollast) ist das gesamte oder wenigstens nahezu das gesamte innerhalb des Wärmetauschers zum Wärmeübergang zur Verfügung stehende Rohrbündel innen oder außen mit Dampf beaufschlagt, während es im Teillastbereich wenigstens teilweise mit Kondensat geflutet ist. Bei extremem Schwachlastbetrieb ist nahezu das gesamte Rohrbündel mit Kondensat geflutet, wodurch die für den Dampf als Kondensationsfläche zur Verfügung stehende Heizfläche auf einen verschwindenden Bruchteil der ursprünglich vorhandenen Heizfläche verringert ist. Die entstehenden Temperaturgradienten sind sehr hoch, was zu einer hohen Materialbeanspruchung führt.

Weil im extremen Schwachlastbetrieb der Kondensatanfall gering ist, verweilt dieses relativ lange in der oder um die Heizschlange und kühlt an dieser aus. An der Phasengrenze zu dem nachströmenden gespannten Dampf kann es deshalb zu plötzlichen Kondensationen des Dampfes und zum schlagartigen Wiederverdampfen soeben entstandenen Kondensates kommen. Dies ist vor allem bei äußerlich dampfbeaufschlagten Rohrbündeln der Fall. Solche Vorgänge sind mit vernehmlicher Geräuschentwicklung verbunden, die nicht nur bei Wärmeübergabestationen für Wohnhäuser und dergleichen störend sind sondern außerdem zu übermäßigen Materialbelastungen und vorschnellem Verschleiß solcher Anlagen führen können. Es hat sich dabei herausgestellt, daß insbesondere modernere, d.h. wenig überdimensionierte, Wärmetauscher zu Geräuschentwicklungen neigen können. Diese Tendenz wird durch Sparmaßnahmen auf der Wärmeabnehmerseite noch gefördert. Diese führen zu Bedarfssituationen, bei denen lediglich ein bis zwei Prozent der maximalen Wärmeübergabeleistung tatsächlich übertragen werden. Dadurch kann es zum Wärmestau in dem Wärmeübertrager kommen. Es zeigt sich, daß die Neigung zur Geräuschbildung um so stärker ist, je geringer die sekundärseitige Wassermenge ist, je besser die Pumpenleistung an Schwachlastfälle angepaßt ist und je leichter der Wärmetauscher konstruiert ist.

Davon ausgehend ist es Aufgabe der Erfindung, eine Wärmeübergabestation sowie ein Verfahren zum Steuern und Regeln eines Wärmetauschers zu schaffen, die in energie- und materialsparender Bauweise ausgeführt sind und einen geräuscharmen Betrieb ermöglichen.

Diese Aufgabe wird durch eine Wärmeübergabestation mit den Merkmalen des Patentanspruches 1 sowie durch ein Verfahren mit den Merkmalen des Anspruches 13 oder 14 gelöst.

Die Wärmeübergabestation weist einen Wärmeverbraucher auf, der im Teillastbetrieb im Kondensatanstau betrieben wird und dazu ein in seiner Kondensatleitung liegendes Drosselventil aufweist. Dieses ist von einer Steuereinheit entsprechend dem bspw. über Temperatursensoren erfaßten Wärmebedarf gesteuert oder geregelt. Zusätzlich zu dieser aus dem Stand der Technik bekannten Verfahrensweise zum Regulieren der Wärmeabgabe eines Wärmetauschers ist in der dampfführenden Vorlaufleitung ein Regelorgan, wie bspw. ein stufenlos einstellbares Drosselventil, vorgesehen. Dieses kann sowohl als Sitzventil als auch als Schieber oder als Klappe ausgebildet sein.

Im Gegensatz zu sonst üblichen, in der Vorlaufleitung zu Wärmetauschern liegenden Durchflußarmaturen, die nur der Gefahrenabschaltung, der Druckkonstanthaltung oder anderweitigen Aufgaben dienen, ist diese Vorlauf-Durchflußarmatur derart ausgebildet, daß der Zustrom von Dampf bei Schwachlastbetrieb gedrosselt wird. Die Steuer- oder Regeleinrichtung beeinflußt somit nicht nur das Rücklauf-Steuerorgan sondern darüber hinaus auch das Vorlauf-Steuerorgan gemäß einer gewünschten Wärmeabgabe des Wärmetauschers. Dadurch kann auch bei wenig oder nicht überdimensionierten Wärmetauschern und angeschlossenen Wärmeverbraucherkreisläufen eine Geräuschbildung im Schwachlastbereich vermieden werden. Bei Schwachlastbetrieb wird das Rücklauf-Steuerorgan so weit geschlossen, daß der Kondensatspiegel in oder an der Heizschlange des Wärmetauschers ansteigt und die wirksame Heizfläche verringert wird. Gleichzeitig wird das Vorlauf-Steuerorgan soweit geschlossen, daß der Dampfzustrom gedrosselt wird. Es nimmt dadurch der in der Heizschlange herrschende Dampfdruck und damit die Dampfdichte ab. Der oberhalb des Kondensatspiegels stehende Dampf ist weniger gespannt und hat eine geringere Energiedichte als der vor dem Vorlauf-Steuerorgan anstehende Dampf. Der eine geringere Energiedichte aufweisende Dampf kondensiert in der Regel ruhig. Der vorentspannte Dampf wirbelt die Kondensatoberfläche nicht auf und die Gefahr von plötzlichen Verdampfungen oder Kondensatströmungen ist gebannt. Es ergibt sich dadurch ein verringerter Anlagenverschleiß. Außerdem wird durch die verminderte Verschleißbelastung ermöglicht, Hochleistungswärmeübertrager klein, leicht, material- und platzsparend auszulegen und somit preiswert zu bauen. Diese Wärmetauscher können infolge der dampfseitigen Nachregulierung bei kondensatseitiger Steuerung/Regelung auch bei extremer Schwachlast völlig ruhig betrieben werden.

Infolge der verminderten Energiedichte des zuströmenden Dampfes ist die Abnahme der zur Verfügung stehenden Heizfläche der Heizschlangen nicht so kraß wie bei herkömmlichen im Kondensatanstau geregelten Wärmetauschern. Um die bspw. mit einem Temperatursensor erfaßte sekundärseitige Wärmeabgabe auf ein Sollmaß zu bringen, läßt das Rücklauf-Steuerorgan so viel Kondensat aus dem Wärmetauscher ausströmen, daß für den teilweise entspannten Dampf mit geringerer Energiedichte genügend Heizfläche zur Verfügung steht. Es steht somit trotz des Betriebs im Kondensatanstau eine relativ große Heizfläche zum Wärmeübergang zur Verfügung, wodurch auch die Effizienz des Wärmeübertragers erhöht werden kann. Die Übertragung der Wärmeenergie auf das Heizwasser des Sekundärkreises erfolgt in einem räumlich relativ ausgedehnten Bereich, was die auftretenden Temperaturgradienten und die damit einhergehenden Materialbelastungen reduziert. Darüber hinaus können die den Sekundärkreis umwälzenden elektrischen Umwälzpumpen, dem verringerten Wärmebedarf entsprechend, langsamer fördern, wobei infolge der vergrößerten Wärmeübergangsfläche und infolge der verringerten Energiedichte des Dampfes ein guter Wärmeübergang sichergestellt und ein Wärmestau in dem Wärmeübertrager vermieden werden.

Die Steuereinrichtung kann bedarfsweise als reine Steuerung ausgeführt sein, die die Wärmeabgabe des Wärmetauschers gemäß einem Vorgabesignal einstellt. Bei den weitaus meisten Anwendungen wird es jedoch vorteilhaft sein, die Steuereinrichtung nach Art einer Regeleinrichtung zu betreiben, wobei die Einstellung der Wärmeabgabe des Wärmeübertragers dazu dient, eine mit der Wärmeabgabe zusammenhängende Ist-Größe eines Meßwertes mit einer Sollgröße in Übereinstimmung zu bringen. Der Meßwert kann sich auf einen physikalischen Parameter, wie Temperatur des Sekundärkreises, beziehen, wobei auch andere Meßwerte, wie bspw. abgegebene Wärmemenge oder dergleichen, in Frage kommen können.

Unabhängig von der konkreten Ausbildung der Steuereinrichtung ist es vorteilhaft, wenn diese bei zunehmender Drosselung des Rücklauf-Steuerorganes, d.h. des Kondensatabflusses aus dem Wärmetauscher, auch das Vorlauf-Steuerorgan und somit den Dampfzutritt drosselt. Die Steuerung der beiden Steuerorgane kann dabei auf unterschiedliche Arten erfolgen. Bei einer ersten Variante wirkt die Steuereinrichtung auf das Rücklauf-Steuerorgan und stellt dessen Durchfluß gemäß einer Abweichung, bspw. einer Ist-Temperatur von einer Soll-Temperatur des Sekundärkreises, ein. Daneben enthält die Steuereinrichtung eine als Nachlauf-Steuerung ausgebildete Einheit, die die Einstellung des Rücklauf-Steuerorganes erfaßt und das Vorlauf-Steuerorgan entsprechend einstellt. Dabei kann das Vorlauf-Steuerorgan völlig parallel zu dem Rücklauf-Steuerorgan geführt werden.

Solche Nachlauf-Steuerungen sind vor allem bei Steuereinrichtungen von Vorteil, die als Dreipunktregler ausgebildet sind und ein Motorventil als Rücklauf-Steuerorgan betätigen. Die Information über die tatsächliche Stellung des Rücklaufventiles wird an dem Ventil selbst über einen entsprechenden Lagesensor erfaßt und an die NachlaufSteuerung gemeldet. Diese stellt dann das Vorlauf-Steuerorgan (Dampfventil) mittels eines entsprechenden Stellmotors nach.

Alternativ können sowohl das Vorlauf- als auch das Rücklauf-Steuerorgan über Schrittmotoren gestellt werden, die von der Steuereinrichtung nachgeführt werden. Bei dieser Variante ist die Information über die tatsächliche Ventilstellung, bspw. durch entsprechendes Zählen von an die Motoren abgegebenen Impulsen, innerhalb der Steuereinrichtung selbst verfügbar oder bekannt, so daß beide Stellmotoren direkt angesteuert werden können und sich die Erfassung der Stellung des Rücklaufventiles erübrigt. Außerdem wird es durch die Verwendung von Schrittmotoren möglich, die Stellgeschwindigkeiten der Steuerorgane aufeinander abzustimmen. Dadurch können auch während der Stellvorgänge, die deutlich länger als 1 Minute dauern können, geräuschfreie Arbeitspunkte sichergestellt werden.

Bei allen Ausführungsformen wirkt sich vorteilhaft aus, daß das in der Vorlaufleitung liegende Ventil bei normalen Regelvorgängen betätigt, d.h. mehr oder weniger geöffnet oder geschlossen wird. Es zeigt sich, daß dies die Funktionsfähigkeit des Ventiles erhält. Ein Ventilausfall infolge monatelangen Stillstandes und sich eventuell an beweglichen Gliedern bildenden Ablagerungen, wie es bei reinen Sicherheitsventilen der Fall ist, wird dadurch vermieden. Das Vorlauf-Steuerorgan kann deshalb gleichzeitig als Sicherheitseinrichtung ausgebildet sein. Dies ist der Fall, wenn für dieses ein in stromlosem Zustand selbsttätig schließendes Ventil (Regelventil mit Schnellschluß) verwendet wird.

Bei einer abgewandelten Ausführungsform ist das Vorlauf-Steuerorgan als Druckregler ausgebildet, der in der zu dem Wärmetauscher führenden Leitung einen Solldruck aufrechterhält, der von der Steuereinrichtung an unterschiedliche Betriebszustände angepaßt wird. Der Solldruck wird im Teillastbetrieb vorzugsweise abgesenkt, wobei er im Schwachlastbetrieb so gering werden kann, daß das Kondensat gerade noch ausfließt. Es wird dadurch eine starke Entspannung des zuströmenden Dampfes und damit eine beträchtliche Reduzierung seiner Energiedichte erreicht. Die Druckabsenkung kann sowohl direkt von der Stellung des Rücklauf-Steuerorganes als auch von in der Steuereinrichtung gespeicherten Werten abhängig gemacht werden, die die Wärmeabgabe des Wärmetauschers beschreiben.

Bei allen dargestellten Varianten kann eine Arbeitsweise dahingehend eingestellt werden, daß mittels des Rücklauf-Steuerorganes die Wärmeabgabe des Wärmetauschers und mittels des Vorlauf-Steuerorganes ein Dampfstrom eingestellt wird, der für den Betrieb des Wärmetauschers in dem gewünschten Leistungsbereich am geeignetsten ist. Insbesondere ist es damit möglich, den Arbeitspunkt des Wärmetauschers so einzustellen, daß dieser geräuscharm oder geräuschfrei arbeitet.

Gegenüber herkömmlichen Wärmeübergabestationen mit im Kondensatanstau betriebenen Wärmetauschern ist die für die Kondensation des Dampfes zur Verfügung stehende Heizfläche im Teillastbereich größer als ein prozentual mit der Teillast übereinstimmender Flächenbereich der Heizfläche. Dies kann insbesondere durch einen wenigstens abschnittsweise nichtlinearen Zusammenhang zwischen der von der NachlaufSteuerung oder der Steuereinrichtung eingestellten Kondensathöhe und der Wärmeabgabe, bzw. durch einen wenigstens abschnittsweise nichtlinearen Zusammenhang zwischen der Drosselung des Rücklauf-Steuerorganes und des Vorlauf-Steuerorganes, erreicht werden. Ein solcher nichtlinearer Zusammenhang ist bspw. schon dann gegeben, wenn die Nachlauf-Steuerung, die das Vorlauf-Steuerorgan dem Nachlauf-Steuerorgan nachführt, mit der Drosselung des Vorlauf-Steuerorganes erst im Teillastbereich einsetzt und dieses dort linear führt.

In der Zeichnung sind Ausführungsbeispiele der Erfindung dargestellt. Es zeigen:
- Fig. 1: eine Wärmeverbraucherstation mit einem kondensatseitig geregelten Wärmetauscher und mit einer Nachlaufsteuerung zur Regulierung des Dampfzutrittes, in schematisierter Darstellung;
- Fig. 2: eine abgewandelte Ausführungsform einer Wärmeverbraucherstation mit einem kondensatseitig geregelten Wärmetauscher, mit reguliertem Dampfzutritt, in schematisierter Darstellung;
- Fig. 3: eine Wärmeverbraucherstation mit kondensatseitig geregeltem Wärmetauscher und mit lastabhängig reguliertem Dampfdruck in der Vorlaufleitung, und
- Fig. 4: ein schematisches, die Regulierung der Wärmeverbraucherstation nach Fig. 1 veranschaulichendes Diagramm.

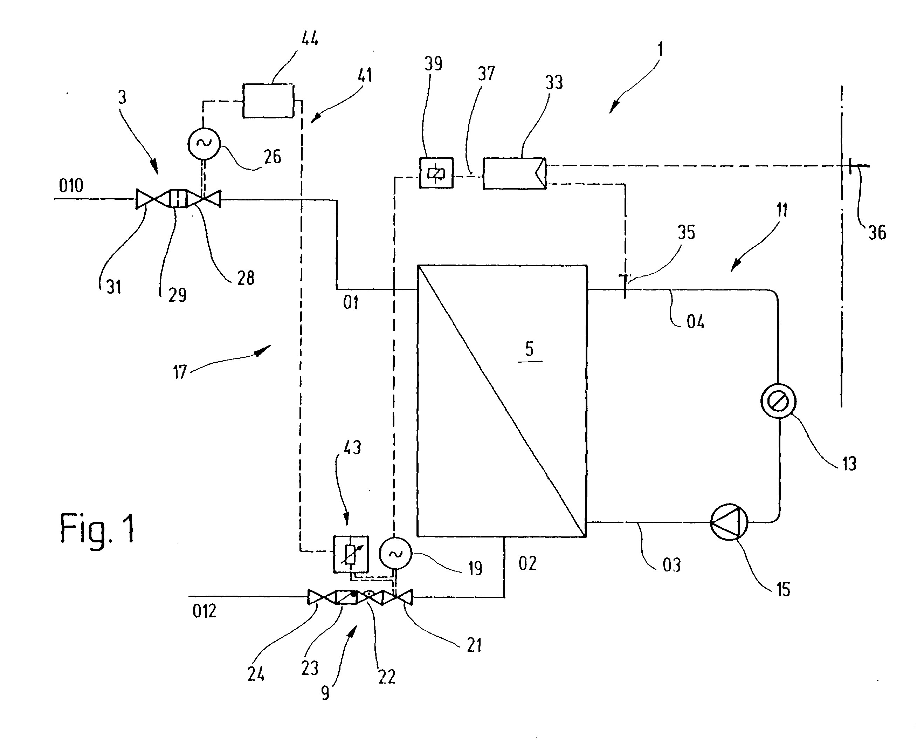

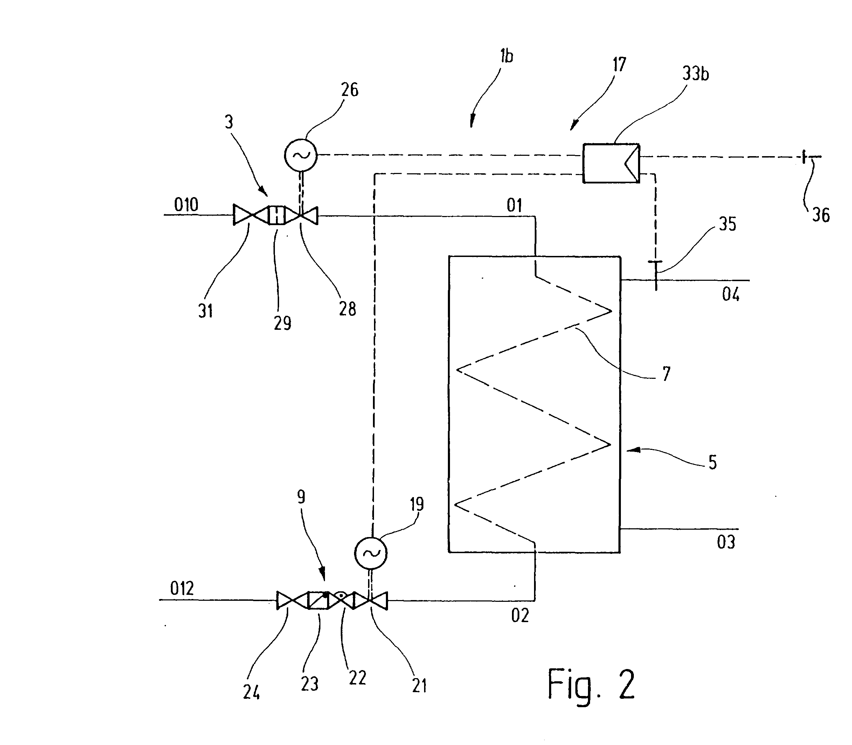

In Fig. 1 ist eine Wärmeverbraucherstation 1 dargestellt, die eingangsseitig an eine Dampfleitung 010 und ausgangsseitig an eine Kondensatrückführungsleitung 012 angeschlossen ist. Die Dampfleitung 010 führt über eine Armaturenanordnung 3 und über eine Vorlaufleitung 01 zu einem Wärmetauscher 5, der ein bspw. in Fig. 2 schematisch angedeutetes Rohrbündel 7 enthält. Das eingangsseitig an die Vorlaufleitung 01 angeschlossene Rohrbündel 7 ist ausgangsseitig an eine Rücklaufleitung 02 angeschlossen, die über eine Armaturenanordnung 9 zu der Kondensatrückführungsleitung 012 führt.

Die Vorlaufleitung 01 bildet mit dem Wärmetauscher 5 und der Rücklaufleitung 02 einen Primärkreislauf, über den dem Wärmetauscher 5 Wärmeenergie zugeführt wird. Diese gibt der Wärmetauscher 5 an einen Sekundärkreislauf 11 ab, der einen von dem Wärmetauscher 5 weg führenden Heizungsvorlauf 04 enthält. Der Heizungsvorlauf 04 führt zu Wärmeverbrauchern 13, wie bspw. Heizkörpern oder dergleichen. Von diesen schließt sich der Kreislauf über eine Umwälzpumpe 15 und einem zu dem Wärmetauscher 5 zurück führenden Heizungsrücklauf 03.

Zur Steuerung bzw. Regelung des Wärmeeintrages in den Sekundärkreislauf 11 wird der Wärmetauscher 5 im Kondensatanstau geregelt. Dazu ist eine Steuereinrichtung 17 vorgesehen. Diese steuert über einen Stellmotor 19 ein in der Rücklaufleitung 02 liegendes Rücklaufventil 21 der Armaturenanordnung 9, das als Rücklauf-Steuerorgan dient. An das Rücklaufventil 21 schließen sich in Durchflußrichtung ein Kondensat-Controller 22, ein Rückschlagventil 23 und ein Handabsperrventil 24 zum manuellen Stillsetzen der Anlage an.

Die Steuereinrichtung 17 beeinflußt außerdem ein in der Vorlaufleitung 01 liegendes und über einen Stellmotor 26 gesteuertes Dampfventil 28, das zu der Armaturenanordnung 3 gehört und als Vorlauf-Regelorgan dient. In Durchströmungsrichtung vor dem Dampfventil 28 sind ein Schmutzfänger 29 und ein Handabsperrventil 31 zum manuellen Stillsetzen der Wärmeverbraucherstation 1 angeordnet.

Das Dampfventil 28 kann außer dem von dem Stellmotor 26 gebildeten Stellantrieb eine Notschließvorrichtung enthalten, die das Dampfventil 28 bspw. bei Stromausfall ganz schließt.

Die Steuereinrichtung 17 enthält eine Steuereinheit 33, die eingangsseitig an einen die Temperatur des Heizungsvorlaufes 04 überwachenden Temperatursensor 35 und bedarfsweise an einen Temperatursensor 36 zur Erfassung der Außentemperatur angeschlossen ist. Die Steuereinheit 33 ist so ausgebildet, daß die von dem Temperatursensor 35 gemeldete Ist-Temperatur des Heizungsvorlaufes 04 mit einem Soll-Wert verglichen wird, der von der Außentemperatur abhängig ist, die der Temperatursensor 36 mißt. Zur Nachführung der Wärmeverbraucherstation 1 gemäß der ermittelten Abweichung zwischen der von dem Temperatursensor 35 gemessenen Ist-Temperatur und einer in Abhängigkeit von der Außentemperatur festgelegten Solltemperatur weist die Steuereinheit 33 einen Ausgang 37 auf, der über einen oder mehrere Schütze 39 mit dem Stellmotor 19 verbunden ist.

Die Steuereinrichtung 17 enthält außerdem eine Nachlaufsteuerung 41 zur Beeinflussung des Dampfventiles 28. Zu der Nachlaufsteuerung 41 gehört ein Lagesensor 43 zur Erfassung der Stellung des Rücklaufventiles 21, der vorzugsweise als Potentiometergeber ausgebildet ist. Die von dem Lagesensor 43 abgegebenen Stellungssignale empfängt eine Nachlauf-Steuereinheit 44, die das Dampfventil 28 in einem vorgegebenen Arbeitsbereich synchron zu dem Rücklaufventil 21 nachführt.

Die insoweit beschriebene Wärmeverbraucherstation 1 arbeitet wie folgt:

Höherer Wärmebedarf, insbesondere Vollast, tritt vor allem dann auf, wenn der Temperatursensor 36 eine sehr niedrige Außentemperatur feststellt und diese an die Steuereinheit 33 meldet oder eine angeschlossene Maschine viel Wärme abnimmt. Diese legt einen entsprechend hohen Sollwert für die Temperatur des Heizungsvorlaufes 04 fest. Solange in dem Sekundärkreislauf 11, der durch die Umwälzpumpe 15 ständig umgewälzt wird, die Solltemperatur nicht erreicht wird, stellt die Steuereinheit 33 dies anhand der von dem Temperatursensor 35 gelieferten Signale fest und gibt entsprechende Signale an den Stellmotor 19 ab, so daß das Rücklaufventil 21 geöffnet wird.

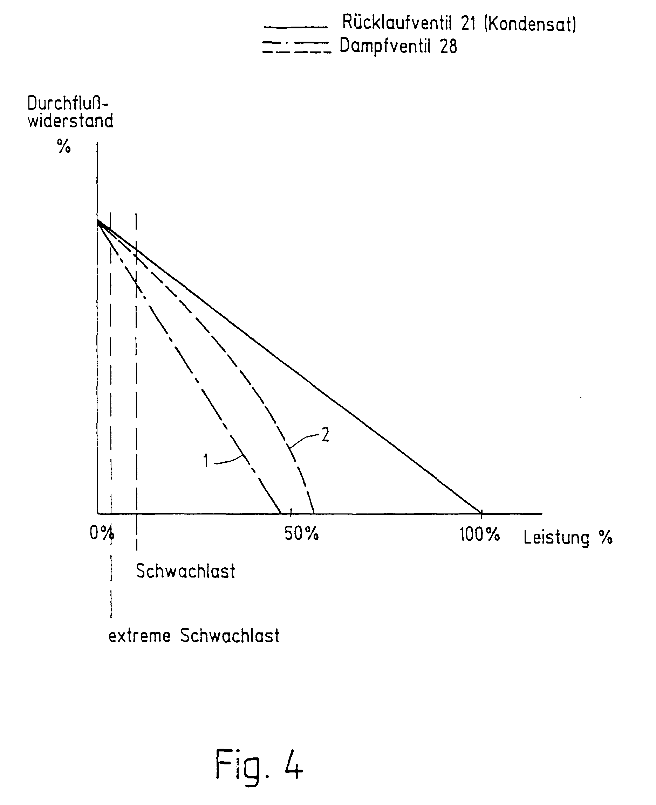

Die Nachlaufsteuerung 41 erfaßt dabei die Stellung des Rücklaufventiles 21 und stellt fest, daß dieses in Offenstellung ist. Entsprechend steuert sie über den Stellmotor 26 das Dampfventil 28 in Offenstellung. Aus der Dampfleitung 010 strömt nun Dampf über die Vorlaufleitung 01 in den Wärmetauscher 5, d.h. genau genommen in das Rohrbündel 7 (Fig. 2) ein. Bei außen beaufschlagten Wärmetauschern strömt der Dampf in den Wärmetauscher und umgibt das Rohrbündel außen. Solche Wärmetauscher sind besonders empfindlich hinsichtlich ihrer Betriebsführung und neigen zur Geräuschentwicklung. Das zunächst in dem Rohrbündel 7 befindliche Kondensat wird über die Rücklaufleitung 02 und das offenstehende Rücklaufventil 21 aus dem Wärmetauscher 5 hinausgedrückt. Der gespannte und heiße Dampf kondensiert dabei innen oder außen an den Wandungen des Rohrbündels 7, wobei das entstehende Kondensat ständig über die Rücklaufleitung 02 entfernt wird. Ein nicht weiter dargestellter Sensor überwacht dabei den Kondensatstand und verhindert, daß Dampf in die Rücklaufleitung 02 gelangen und somit auf die Kondensatseite durchschlagen könnte. Ein solcher Arbeitspunkt des in Fig. 1 dargestellten Systemes ergibt sich bspw. aus dem in der Fig. 4 veranschaulichten Diagramm. Dieses zeigt, daß bei Vollast, d.h. 100% Leistung, sowohl das Rücklaufventil 21 als auch das Dampfventil 28 voll offen sind, d.h. umgekehrt ihren jeweils minimalen Durchlaßwiderstand (0%) aufweisen.

Die den Durchlaßwiderstand des Kondensat- oder Rücklaufventils 21 und des Dampfventils 28 beschreibenden jeweiligen Kurven der Fig. 2 sind Mittelwerte, die von Regelschwingungen überlagert sein können. Sie zeigen an, daß die Regelung des Wärmetauschers 5 zu niedrigeren Wärmeabgaben hin durch eine Zunahme des Durchflußwiderstandes des Rücklaufventiles 21 bewerkstelligt wird. Dies hat einen Anstieg des Kondensatspiegels in dem Rohrbündel 7 zur Folge, die dadurch ihre wirksame Heizfläche verringert. Gleichzeitig strömt entsprechend weniger Dampf über die Vorlaufleitung 01 nach.

Im Teillastbereich, der bei der vorliegenden Ausführungsform bei 50% der vollen Leistung beginnt, ist das Rücklaufventil 21 bereits relativ weit geschlossen und der entsprechende Durchflußwiderstand hat einen hohen Wert angenommen. Zu noch niedrigeren Leistungswerten hin setzt nun zusätzlich eine Drosselung des Dampfzustromes mittels des Dampfventiles 28 ein, wodurch der Druck des zuströmenden Dampfes und damit seine Energiedichte abnimmt. Dies ist insbesondere für den Schwachlastbereich und für extreme Schwachlast von Bedeutung, die unterhalb 10% der vollen Leistung liegt. In diesem Leistungsbereich ist das Kondensatventil 21 weitgehend geschlossen und es können lediglich geringe Kondensatmengen aus dem Wärmetauscher 5 ausfließen. Die Nachlaufsteuerung 41 schließt dabei das Dampfventil 28 ebenfalls relativ weit, so daß der nachströmende Dampf nur noch einen geringen Druck und somit eine geringe Dichte hat. Die Energiedichte des dadurch weitgehend entspannten Dampfes ist vermindert, so daß die Steuereinheit 33 zum Erreichen der Solltemperatur in der Heizungsleitung 04 das Rücklaufventil 21 so einregelt, daß der Kondensatpegel in dem Rohrbündel 7 nicht zu hoch ansteigt und somit die wirksame Heizfläche nicht zu sehr verringert. Die Abnahme der wirksamen Heizfläche ist somit der Abnahme der von dem Wärmetauscher 5 zu übertragenden Leistung nicht proportional, sondern sie nimmt weniger ab als diese. Dies wird jedoch durch die zusätzlich abnehmende Energiedichte des zuströmenden Dampfes ausgeglichen. Es bilden sich dadurch auch bei extremem Schwachlastbetrieb keine zu großen Temperaturdifferenzen an dem Rohrbündel 7 aus. Insbesondere werden jedoch bei dem insgesamt langsam kondensierenden Dampf zu große Temperaturunterschiede zwischen nachströmendem Dampf und auskühlendem Kondensat vermieden. Die Beschränkung der zuströmenden Dampfmenge im Teillastbetrieb führt damit zu einer ruhigen und verschleißarmen Arbeitsweise des Wärmetauschers 5 auch bei extremer Schwachlast. Mit der Nachführung des Dampfventils 28 entsprechend dem Rücklaufventil 21 lassen sich insbesondere Wärmetauscher 5 geräuschfrei betreiben, die außenbeheizte Rohre, d.h. ein Rohrbündel 7, aufweisen, bei dem der Dampf die Rohre umgibt. Solche Wärmetauscher sind erheblich billiger als Wärmetauscher 5, bei denen der Dampf in dem Rohrbündel 7 geführt ist.

Zur Vermeidung von Unterdruck in dem Wärmetauscher 5 kann vorgesehen werden, daß das Dampfventil 28 im Rahmen der vorstehend beschriebenen Regelung nicht ganz geschlossen sondern lediglich in einen sehr stark gedrosselten Zustand überführbar ist, in dem nur sehr wenig Dampf nachströmen kann.

Bei einer abgewandelten Ausführungsform der Steuereinrichtung 17 wird das Dampfventil 28, wie in Fig. 4 mit einer zweiten Kurve angedeutet ist, im Teillastbereich beginnend im Bezug auf das Rücklaufventil 28 nicht linear geführt. Dies kann bspw. mit einer geeigneten Widerstandscharakteristik des Potentiometers des Lagesensors 43 erreicht werden. Eine solche Charakteristik kann bei Wärmetauschern 5 von Vorteil sein, die relativ leicht zur Geräuschbildung neigen.

Es ist darüber hinaus möglich, die mit der ersten, in Fig. 4 strichpunktiert angedeuteten Kurve, die das Schließen des Dampfventiles 28 beschreibt, mit einer geringeren Steigung zu versehen, so daß das Dampfventil 28 bereits bei höheren Leistungswerten beginnend geschlossen wird. Im Extremfall kann es ganz synchron, d.h. parallel zu dem Rücklaufventil 21 geführt werden, wobei dann die Kurven des Rücklaufventiles 21 und des Dampfventiles 28 in Fig. 4 miteinander identisch sind.

Eine abgewandelte Ausführungsform der Erfindung ist in Fig. 2 als Wärmeverbraucherstation 1b dargestellt. Ohne erneute Erläuterung wird im folgenden auf Teile, die mit entsprechenden Teilen der vorstehend beschriebenen Wärmeverbraucherstation 1 identisch sind, mit den jeweils gleichen Bezugszeichen Bezug genommen. Die Unterschiede erstrecken sich allein auf die Steuereinrichtung 17. Diese enthält eine Steuereinheit 33b, die die von den Temperatursensoren 35, 36 gelieferten Signale auswertet. Die Steuereinheit 33b steuert sowohl das Dampfventil 28 als auch das Rücklaufventil 21. Die dazu verwendeten Stellmotoren 19, 26 sind Synchron- oder Schrittmotoren oder anderweitige Stellmotoren, deren Position von der Steuereinheit 33b direkt bestimmt werden kann, ohne daß dazu ein gesonderter Lagerückmelder erforderlich wäre. Außerdem sind sie in ihrer Stellgeschwindigkeit aufeinander abstimmbar. Die Steuereinheit 33b übernimmt bei dieser Ausführungsform neben der Steuerung des Rücklaufventiles 21 zur Leistungsanpassung des Wärmetauschers 5 zugleich die Steuerung des Dampfventiles 28, die bei der vorstehend beschriebenen Ausführungsform der Nachlaufsteuerung 41 vorbehalten war. Über das Dampfventil 28 wird ein geräuschfreier Arbeitspunkt des Wärmetauschers 5 eingestellt, wobei die unterschiedlichen, in Fig. 4 dargestellten, Steuerkurven für das Dampfventil 28 berücksichtigt werden.

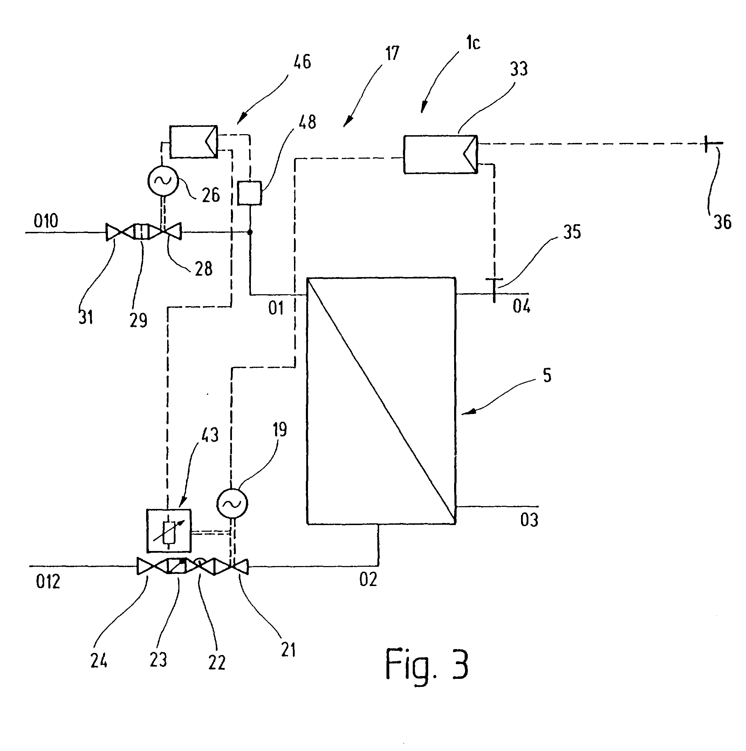

Eine weitere Ausführungsform ist aus Fig. 3 ersichtlich, in der eine Wärmeverbraucherstation lc dargestellt ist. Soweit die Wärmeverbraucherstation lc mit den vorstehend beschriebenen übereinstimmt, werden gleiche Bezugszeichen verwendet. Die Unterschiede liegen in der Ausbildung der Steuereinrichtung 17. Diese ist so ausgebildet, daß bei Schwachlast, die durch eine nahezu geschlossene Stellung des Rücklaufventiles 21 zu erkennen ist, der in der Vorlaufleitung 01 herrschende Dampfdruck abgesenkt wird. Dazu ist eine Steuereinheit 46 vorgesehen, die über den Lagesensor 43 die Position des Rücklaufventiles 21 überwacht. Außerdem erhält sie über einen Drucksensor 48 ein Signal, das den Dampfdruck in der Vorlaufleitung 01 kennzeichnet. Die Steuereinheit 46 ist derart ausgebildet, daß sie den von dem Drucksensor 48 gemeldeten Ist-Druck mit einem Sollwert vergleicht, der hoch ist, wenn das Rücklaufventil 21 weit geöffnet ist, und der um so niedriger ist, je weiter das Rücklaufventil 21 geschlossen ist. Damit bildet die Steuereinheit 46 eine Regelschleife für den Dampfdruck der Vorlaufleitung 01, mit variablem Sollwert. Die Steuereinheit 46 ist an den Stellmotor 26 des Dampfventiles 28 angeschlossen und senkt den Druck in der Vorlaufleitung 01 bei Schwachlast ab, indem sie das Dampfventil 28 bei zunehmender Schwachlast schließt.

Diese Ausführungsform hat den Vorteil, daß es auf einfache Weise möglich ist, in der Vorlaufleitung 01 einen minimalen Dampfdruck aufrechtzuerhalten. Außerdem hat die geregelte Absenkung des Dampfdruckes in der Vorlaufleitung 01 den Vorteil, daß auch bei kritischen Bedingungen eine ruhige Arbeitsweise des Wärmetauschers 5 sicher erreicht werden kann.

Bei einer weiter abgewandelten, nicht dargestellten, Ausführungsform erhält die Steuereinheit 46 die Ist-Position des Rücklaufventiles 21 direkt von einer entsprechend abgewandelten Steuereinheit 33, so daß der Lagesensor 43 weggelassen werden kann.

Die Anpassung von Wärmeübertragern von Dampf/Flüssigkeits- Wärmeübergabestationen oder Dampf/Dampf- Wärmeübergabestationen an unterschiedliche Lastfälle ist mittels Kondensatanstauregelung möglich. Bei extremem Schwachlastbetrieb können Geräuschprobleme auftreten, die durch schlagartige Kondensation und Nachverdampfung von zuströmendem Dampf entstehen können. Hier wird durch eine Drosselung des zuströmenden Dampfes im Teil- bzw. Schwachlastbereich abgeholfen. Dies ist sowohl mit einer gesonderten Druckregelung als auch mit einer Nachlaufsteuerung eines in der Vorlaufleitung liegenden Dampfventiles möglich. Es kann somit eine geräuschfreie und verschleißarme Arbeitsweise des Wärmetauschers auch ohne die sonst übliche Überdimensionierung erreicht werden. Umgekehrt wird damit eine material- und ressourcensparende Auslegung des Wärmetauschers ermöglicht.

Gleichzeitig bleiben die Vorteile der kondensatseitigen Regelung erhalten:
- Der Dampfdruck wird genutzt, um das Kondensat zu dem Dampferzeuger (Kessel) zurückzufördern. Es ist keine Kondensatpumpe erforderlich.
- Der Primärkreis ist immer "naß". Es wird kein Vakuum erzeugt und keine Luft angesaugt. Deshalb gibt es keine Korrosion.
- Das Kondensat wird optimal ausgekühlt.
- Der Dampf-Kondensat-Kreislauf ist 100%-ig geschlossen. Die Rohre sind immer naß.
- Mit einem einzigen Apparat, dem Wärmetauscher, werden zugleich Dampfwärmenutzung und Kondensatauskühlung erreicht.

## Patentansprüche

1. Wärmeübergabestation (1), die mit als Wärmeträger dienendem Dampf beaufschlagbar ist,
mit einem Wärmetauscher (5), der eingangsseitig an eine Dampfleitung (01) und ausgangsseitig an eine Kondensatleitung (02) angeschlossen ist,
mit einem auf die Kondensatleitung (02) wirkenden Rücklauf-Steuerorgan (21), mit dem der Abfluß des Kondensats aus dem Wärmetauscher (5) drosselbar ist,
mit einer Steuereinrichtung (17), die das Rücklauf-Steuerorgan (21) gemäß einer gewünschten Wärmeabgabe des Wärmetauschers (5) beeinflußt,
dadurch gekennzeichnet,
daß ein auf die Dampfleitung (01) wirkendes Vorlauf-Steuerorgan (28) vorgesehen ist, mit dem der durchströmende Dampf drosselbar ist,
daß die Steuereinrichtung (17) auch das Vorlauf-Steuerorgan (28) beeinflußt und
daß die Steuereinrichtung (17) derart ausgebildet ist, daß mit dem Vorlauf-Steuerorgan (28) der Druck des durchströmenden Dampfes auf einen geringen Wert geregelt und mit dem Rücklauf-Steuerorgan (21) ein geringer ausfließender Kondensatstrom eingestellt werden, wenn die gewünschte Wärmeabgabe des Wärmetauschers (5) gering ist, und daß sowohl der von dem Vorlauf-Steuerorgan (28) bestimmte Druck als auch der von dem Rücklauf-Steuerorgan (21) eingestellte Kondensatstrom zu größeren Werten hin verändert werden, wenn eine größere Wärmeabgabe gewünscht wird.

2. Wärmeübergabestation nach Anspruch 1, dadurch gekennzeichnet, daß sie wenigstens einen Temperatursensor (35) aufweist, der wenigstens eine mit der Wärmeabgabe des Wärmetauschers (5) zusammenhängende Temperatur erfaßt, und daß die Steuereinrichtung (17) dazu eingerichtet ist, von dem Sensor (35) abgegebene Signale zu empfangen.

3. Wärmeübergabestation nach Anspruch 1, dadurch gekennzeichnet, daß die Steuereinrichtung (17) derart ausgelegt ist, daß sowohl das Vorlauf- als auch das Rücklauf-Steuerorgan (28, 21) die entsprechende Strömung bei höherer Wärmeabgabe weniger und bei niedrigerer Wärmeabgabe mehr drosseln.

4. Wärmeübergabestation nach Anspruch 1, dadurch gekennzeichnet, daß das Rücklauf-Steuerorgan (21) von einer von der Steuereinrichtung (17) enthaltenen Regelschleife anhand der Abweichung eines Ist-Temperaturwertes von seinem Soll-Wert gesteuert ist.

5. Wärmeübergabestation nach Anspruch 1, dadurch gekennzeichnet, daß das Vorlauf-Steuerorgan (28) anhand der Einstellung des Rücklauf-Steuerorgans (21) eingestellt wird.

6. Wärmeübergabestation nach Anspruch 5, dadurch gekennzeichnet, daß sie eine Nachlaufsteuerung (41) enthält, die die Einstellung des Vorlauf-Steuerorganes (28) an die Einstellung des Rücklauf-Steuerorganes (21) anpaßt.

7. Wärmeübergabestation nach Anspruch 1, dadurch gekennzeichnet, daß das Vorlauf-Steuerorgan (28) ein in stromlosem Zustand selbsttätig schließendes Ventil ist.

8. Wärmeübergabestation nach Anspruch 1, dadurch gekennzeichnet, daß mittels des Rücklauf-Steuerorgans (21) die Wärmeabgabe des Wärmetauschers (5) und mittels des Vorlauf-Steuerorgans (28) ein für den Betrieb in dem gewünschten Leistungsbereich angemessener Dampfzustrom eingestellt werden.

9. Wärmeübergabestation nach Anspruch 1, dadurch gekennzeichnet, daß das Vorlauf-Steuerorgan (28) derart geführt ist, daß bei Teillastbetrieb des Wärmetauschers (5) für die Kondensation des einströmenden Dampfes eine Heizfläche zur Verfügung steht, die größer ist als ein prozentual mit der Teillast übereinstimmender Flächenbereich der Heizfläche.

10. Wärmeübergabestation nach Anspruch 1 oder 6, dadurch gekennzeichnet, daß die Steuereinrichtung (17) oder die Nachlaufsteuerung (41) einen wenigstens abschnittsweise nichtlinearen Zusammenhang zwischen Wärmeabgabe und Kondensathöhe einstellen.

11. Wärmeübergabestation nach Anspruch 1, dadurch gekennzeichnet, daß der Zusammenhang zwischen der Drosselung des Rücklauf-Steuerorgans (21) und des Vorlauf-Steuerorgans (28) wenigstens abschnittsweise nichtlinear ist.

12. Wärmeübergabestation nach Anspruch 1, dadurch gekennzeichnet, daß das Vorlauf-Steuerorgan (28) und das Rücklauf-Steuerorgan (28) von Stellantrieben betätigt sind, deren Stellgeschwindigkeit von der Steuereinrichtung (17) beeinflußbar ist.

13. Verfahren zum Steuern eines Wärmetauschers mit einer kondensatseitigen Leistungsregelung, bei dem im Teillast- und insbesondere im extremen Schwachlastbetrieb zusätzlich zu der kondensatseitigen Regelung der Dampfzustrom gedrosselt wird, indem bei einer Wärmeübergabestation (1),
die mit als Wärmeträger dienendem Dampf beaufschlagbar ist,
die einen Wärmetauscher (5) aufweist, der eingangsseitig an eine Dampfleitung (01) und ausgangsseitig an eine Kondensatleitung (02) angeschlossen ist,
die ein auf die Kondensatleitung (02) wirkendes Rücklauf-Steuerorgan (21) aufweist, mit dem der Abfluß des Kondensats aus dem Wärmetauscher (5) drosselbar ist, und
die eine Steuereinrichtung (17) aufweist, die das Rücklauf-Steuerorgan (21) gemäß einer gewünschten Wärmeabgabe des Wärmetauschers (5) beeinflußt,
kennzeichnenderweise,
mit einem in der Dampfleitung (01) vorgesehenen Vorlauf-Steuerorgan (28) der durchströmende Dampf gedrosselt wird,
mit der Steuereinrichtung (17) auch das Vorlauf-Steuerorgan (28) beeinflußt wird und
indem die Steuereinrichtung (17) mit dem Vorlauf-Steuerorgan (28) den Druck des durchströmenden Dampfes auf einen geringen Wert regelt und mit dem Rücklauf-Steuerorgan (21) ein geringer ausfließender Kondensatstrom einstellt, wenn die gewünschte Wärmeabgabe des Wärmetauschers (5) gering ist, wobei sowohl der von dem Vorlauf-Steuerorgan (28) bestimmte Druck als auch der von dem Rücklauf-Steuerorgan (21) eingestellte Kondensatstrom zu größeren Werten hin verändert werden, wenn eine größere Wärmeabgabe gewünscht wird.

14. Verfahren zum Steuern eines Wärmetauschers mit einer kondensatseitigen Leistungsregelung, bei dem im Teillast- und insbesondere im extremen Schwachlastbetrieb zusätzlich zu der kondensatseitigen Regelung mittels eines dem Wärmetauscher (5) vorgeschalteten Ventils (28) der Dampfzustrom gedrosselt wird, um den Druck in dem Wärmetauscher (5) abzusenken, indem bei einer Wärmeübergabestation (1) mittels eines Rücklauf-Steuerorgans (21) die Wärmeabgabe des Wärmetauschers (5) und mittels eines Vorlauf-Steuerorgans (28) ein für den Betrieb in dem gewünschten Leistungsbereich angemessener Dampfzustrom eingestellt werden.

## Claims

1. A heat transfer station (1) which can be acted upon by steam serving as the heat transfer medium,
having a heat exchanger (5) which is connected on the inlet side to a steam line (01) and on the outlet side to a condensate line (02),
having a return-flow control member (21) acting on the condensate line (02), with which it is possible to throttle the outflow of condensate from the heat exchanger (5),
having a control device (17) which controls the return-flow control member (21) according to a desired heat dissipation from the heat exchanger (5),
characterised in
that an inlet control member (28) acting on the steam line (01) is provided, with which the throughflowing steam can be throttled,
that the control device (17) also controls the inlet control member (28) and
that the control device (17) is so designed that the pressure of the throughflowing steam can be regulated to a low value by the inlet control member (28) and a low outflowing condensate flow can be set by the return-flow control member (21) when the desired heat dissipation of the heat exchanger (5) is low, and in that both the pressure determined by the inlet control member (28) and the condensate flow adjusted by the return-flow control member (21) are changed to higher values when greater heat dissipation is desired.

2. A heat transfer station according to Claim 1, characterised in that it has at least one temperature sensor (35) which detects at least one temperature which is associated with the heat dissipation of the heat exchanger (5), and in that the control device (17) is set up to receive signals emitted from the sensor (35).

3. A heat transfer station according to Claim 1, characterised in that the control device (17) is so designed that both the inlet control member (28) and the return-flow control member (21) throttle the corresponding flow to a lesser extent with high heat dissipation and to a greater extent with lower heat dissipation.

4. A heat transfer station according to Claim 1, characterised in that the return-flow control member (21) is controlled by a loop on the basis of a deviation of an actual temperature value from its desired value.

5. A heat transfer station according to Claim 1, characterised in that the inlet control member (28) is adjusted on the basis of the setting of the return-flow control member (21).

6. A heat transfer station according to Claim 5, characterised in that it includes a servo-control (41) which adapts the setting of the inlet control member (28) to the setting of the return-flow control member (21).

7. A heat transfer station according to Claim 1, characterised in that the inlet control member (28) is a valve which automatically closes in the de-energised state.

8. A heat transfer station according to Claim 1, characterised in that the heat dissipation of the heat exchanger (5) is adjusted by means of the return-flow control member (21) and a steam inflow appropriate for operation within the desired output range is adjusted by means of the inlet control member (28).

9. A heat transfer station according to Claim 1, characterised in that the inlet control member (28) is operated so that under partial-load operation of the heat exchanger (5) there is available for the condensation of the inflowing steam a heating surface which is larger than a surface region of the heating surface corresponding to a percentage of the partial load.

10. A heat transfer station according to Claim 1 or 6, characterised in that the control device (17) or the servo-control (41) sets a correlation, which is non-linear at least in stages, between heat dissipation and condensate level.

11. A heat transfer station according to Claim 1, characterised in that the correlation between the throttling of the return-flow control member (21) and of the inlet control member (28) is non-linear at least in stages.

12. A heat transfer station according to Claim 1, characterised in that the inlet control member (28) and the return-flow control member (21) are operated by actuators, the actuating speed of which can be controlled by the control device (17).

13. A method of controlling a heat exchanger with output regulation on the condensate side, in which under partial load operation and especially under extreme low-load operation the steam inflow is throttled additionally to the regulation on the condensate side, in that in a heat transfer station (1),
which can be acted upon by steam serving as the heat transfer medium,
which has a heat exchanger (5) which is connected on the inlet side to a steam line (01) and on the outlet side to a condensate line (02),
which has a return-flow control member (21) acting on the condensate line (02), with which it is possible to throttle the outflow of condensate from the heat exchanger (5),
which has a control device (17) which controls the return-flow control member (21) according to a desired heat dissipation from the heat exchanger (5),
characterised in that
the throughflowing steam is throttled by an inlet control member (28) provided in the steam line (01),
the inlet control member (28) is also controlled by the control device (17) and
the control device (17) regulates the pressure of the throughflowing steam to a low value with the inlet control member (28) and a low outflowing condensate flow is set by the return-flow control member (21) when the desired heat dissipation of the heat exchanger (5) is low, wherein both the pressure determined by the inlet control member (28) and the condensate flow adjusted by the return- flow control member (21) are changed to higher values when greater heat dissipation is desired.

14. A method of controlling a heat exchanger with output regulation on the condensate side, in which under partial load operation and especially under extreme low-load operation the steam inflow is throttled additionally to the regulation on the condensate side by means of a valve (28) connected upstream of the heat exchanger (5) so as to decrease the pressure in the heat exchanger (5), in that in a heat transfer station (1) the heat dissipation of the heat exchanger (5) is adjusted by means of a return-flow control member (21) and a steam inflow appropriate for operation within the desired output range is adjusted by means of an inlet control member (28).

## Revendications

1. Station de transfert de chaleur (1) pouvant être alimentée en vapeur servant de caloporteur, comprenant :
- un échangeur de chaleur (5) qui est raccordé côté entrée à une conduite de vapeur (01) et côté sortie à une conduite de condensat (02),
- un organe de commande retour (21) qui agit sur la conduite de condensat (02) et à l'aide duquel le flux de condensat sortant de l'échangeur de chaleur (5) peut être freiné,
- un dispositif de commande (17) qui agit sur l'organe de commande retour (21) en fonction de la demande d'émission de chaleur de l'échangeur de chaleur (5),
caractérisée par le fait
- qu'il est prévu un organe de commande aller (28) qui agit sur la conduite de vapeur (01) et à l'aide duquel le débit de passage de vapeur peut être freiné,
- que le dispositif de commande (17) agit également sur l'organe de commande aller (28), et
- que le dispositif de commande (17) est conçu de manière que la pression de la vapeur soit régulée sur une valeur plus faible à l'aide de l'organe de commande aller (28) et que le flux de condensat sortant soit réglé sur une valeur plus faible à l'aide de l'organe de commande retour (21) lorsque la demande d'émission de chaleur de l'échangeur de chaleur (5) est faible et qu'aussi bien la pression déterminée par l'organe de commande aller (28) que le flux de condensat réglé à l'aide de l'organe de commande retour (21) sont modifiés vers des valeurs plus élevées lorsque la demande d'émission de chaleur est accrue.

2. Station de transfert de chaleur selon la revendication 1, caractérisée par le fait qu'elle comprend au moins un détecteur de température (35) qui détecte au moins une température en relation avec l'émission de chaleur de l'échangeur de chaleur (5) et que le dispositif de commande (17) est conçu pour recevoir les signaux émis par le détecteur (35).

3. Station de transfert de chaleur selon la revendication 1, caractérisée par le fait que le dispositif de commande (17) est conçu de manière qu'aussi bien l'organe de commande aller (28) que l'organe de commande retour (21) freinent moins l'écoulement correspondant en cas d'émission de chaleur accrue et le freinent davantage en cas d'émission de chaleur réduite.

4. Station de transfert de chaleur selon la revendication 1, caractérisée par le fait que l'organe de commande retour (21) est commandé par une boucle de régulation contenant le dispositif de commande (17), sur la base de l'écart d'une valeur de température effective par rapport à sa valeur de consigne.

5. Station de transfert de chaleur selon la revendication 1, caractérisée par le fait que l'organe de commande aller (28) est réglé par réglage de l'organe de commande retour (21).

6. Station de transfert de chaleur selon la revendication 5, caractérisée par le fait qu'elle comprend une commande d'asservissement (41) qui adapte le réglage de l'organe de commande aller (28) au réglage de l'organe de commande retour (21).

7. Station de transfert de chaleur selon la revendication 1, caractérisée par le fait que l'organe de commande aller (28) est une vanne qui se ferme automatiquement en l'absence de courant.

8. Station de transfert de chaleur selon la revendication 1, caractérisée par le fait que l'émission de chaleur de l'échangeur de chaleur (5) est réglée à l'aide de l'organe de commande retour (21) et qu'une arrivée de vapeur adaptée au fonctionnement dans la plage de puissance désirée est réglée à l'aide de l'organe de commande aller (28).

9. Station de transfert de chaleur selon la revendication 1, caractérisée par le fait que l'organe de commande aller (28) est conduit de telle manière que pour le fonctionnement sous charge partielle de l'échangeur de chaleur (5), le pourcentage de la surface de chauffe disponible pour la condensation de la vapeur entrante soit plus grand que le pourcentage de charge correspondant à la charge partielle.

10. Station de transfert de chaleur selon la revendication 1 ou 6, caractérisée par le fait que le dispositif de commande (17) ou la commande d'asservissement (41) établit une relation au moins en partie non linéaire entre l'émission de chaleur et la hauteur de condensat.

11. Station de transfert de chaleur selon la revendication 1, caractérisée par le fait que la relation entre le freinage de l'organe de commande retour (21) et le freinage de l'organe de commande aller (28) est au moins en partie non linéaire.

12. Station de transfert de chaleur selon la revendication 1, caractérisée par le fait que l'organe de commande aller (28) et l'organe de commande retour (21) sont actionnés par des servocommandes dont la vitesse de réglage peut être modulée par le dispositif de commande (17).

13. Procédé pour la commande d'un échangeur de chaleur avec une régulation de puissance côté condensat, suivant lequel, en fonctionnement sous charge partielle et en particulier en fonctionnement sous charge extrêmement réduite, on procède au freinage de l'arrivée de vapeur en plus de la régulation côté condensat par le fait que dans une station de transfert de chaleur (1),
- qui est alimentée en vapeur servant de caloporteur,
- qui comprend un échangeur de chaleur (5) raccordé côté entrée à une conduite de vapeur (01) et côté sortie à une conduite de condensat (02),
- qui comprend un organe de commande retour (21) agissant sur la conduite de condensat (02), à l'aide duquel le flux de condensat sortant de l'échangeur de chaleur (5) peut être freiné, et
- qui comprend un dispositif de commande (17) agissant sur l'organe de commande retour (21) en fonction de la demande d'émission de chaleur de l'échangeur de chaleur (5),
- on freine le débit de passage de vapeur à l'aide d'un organe de commande aller (28) prévu dans la conduite de vapeur (01),
- on fait agir le dispositif de commande (17) également sur l'organe de commande aller (28),
- le dispositif de commande (17) agissant sur l'organe de commande aller (28) pour régler la pression de la vapeur à une valeur plus faible et sur l'organe de commande retour (21) pour régler un débit de condensat sortant plus faible lorsque la demande d'émission de chaleur de l'échangeur de chaleur est faible, en faisant varier aussi bien la pression déterminée par l'organe de commande aller (28) que le débit de condensat réglé par l'organe de commande retour (21) vers des valeurs plus élevées lorsqu'il y a une demande d'émission de chaleur plus importante.

14. Procédé pour la commande d'un échangeur de chaleur avec une régulation de puissance côté condensat, suivant lequel, en fonctionnement sous charge partielle et en particulier en fonctionnement sous charge extrêmement réduite, on procède au freinage de l'arrivée de vapeur au moyen d'une vanne (28) montée en amont de l'échangeur de chaleur (5), en plus de la régulation côté condensat, pour abaisser la pression dans l'échangeur de chaleur (5), en réglant, dans une station de transfert de chaleur (1), l'émission de chaleur de l'échangeur de chaleur (5) à l'aide d'un organe de commande retour (21) et une arrivée de vapeur adaptée au fonctionnement dans la plage de puissance désirée à l'aide d'un organe de commande aller (28).
